# EUROPEAN PATENT APPLICATION

(11) **EP 4 645 399 A1**
(43) Date of publication of application: **05.11.2025**
(21) Application number: 24172900.3
(22) Date of filing: 29.04.2024
(51) Int. Cl.: H01M 4/04, H01M 4/66, H01M 4/70, H01M 10/0585, H01M 50/46, H01M 50/466, H01M 50/54

(54) **A METHOD FOR PRODUCING A MONOCELL OF A BATTERY**

(71) Applicant: Renata AG, 4452 Itingen (CH)
(72) Inventor: HAERING, Pascal, 4147 Aesch (CH); PFROMMER, Stefan, 5074 Eiken (CH); EL BARADAI, Oussama, 4057 Basel (CH); WU, Han, Pembroke Pines, 33029 (US)
(74) Representative: ICB SA

(57) **Abstract**

Cut-out patterns are produced in a first coated metal foil (14), a second coated metal foil (20) and pair of separator sheets (25). From the first foil (14), the shape of the coated portion (6) of the first electrode is partially cut out along a cut-out lane (17). The cut-out is partial in the sense that said coated portion remains attached to the foil at the predefined position (19) of the first electrode tab. The cut-out pattern in the first foil additionally includes an alignment opening (18, 18a), while the cut-out patterns in the second foil and in the separator sheets also include respective alignment openings (23a, 26). The first foil (14) is inserted between the separator sheets (25) wherein at least one pair of alignment openings (26) in said separator sheets are mutually aligned to each other and to an alignment opening (18, 18a) in the first foil. The separator sheets are then bonded along the cut-out lane (17), to form a first assembly comprising a pocket (11) that contains the coated portion (6) of the first electrode. The second foil (20) is then placed on or under said first assembly, and the alignment opening (23a) in the second foil is aligned to the aligned openings in the first assembly The second foil is attached to the first assembly to obtain a second assembly (28). From the second assembly, the monocell is cut out according to a predefined shape.

## Description

### Field of the Invention

The present invention is related to batteries, in particular to batteries comprising a plurality of stacked battery cells.

### State of the art.

A battery cell comprises two or more electrodes separated by a separator sheet. The cell may be produced by a variety of production techniques, including winding, folding and stacking. According to the stacking technique, multiple monocells are stacked together, each monocell comprising a first electrode, usually a cathode, inserted between two separator sheets. The separator sheets are joined together along the perimeter of the cathode by heat or adhesive and then cut to form a pocket having the same shape and dimensions as the anode. The cathode-containing pockets are then stacked alternately with the anodes into a metal container and tabs extending from the electrodes are welded together for connection to the contacts of the battery. The container is filled with a liquid electrolyte before final sealing. Alternatively, the stacked cells can be integrated in an aluminium laminate pouch. The general advantage of stacked cell batteries is that such batteries can be produced in many different shapes as the shape of the cells is not limited to any particular format.

Each pair of a cathode-containing pocket and an anode forms a monocell, hence the battery comprises multiple stacked monocells. As the size of the battery reduces however, it becomes more difficult to control the position of the cathode between the separator layers. As a result, the accuracy and efficiency decreases as the cell size decreases. Furthermore, handling and aligning individual mono-cells becomes more difficult as the size becomes smaller.

An improved assembly method has been developed wherein a monocell is produced by placing cathode sheets which have been cut in the desired shape of the cell between continuous rolls of separator sheets, placing an anode sheet on top or underneath thereof, and laminating the sheets together while applying heat and pressure, followed by cutting out the monocell according to a desired shape. This increases the stiffness of the monocells and enables higher processing speeds.

However, not every type of separator sheet can be laminated together easily. Furthermore, the pressure and the heat used for the lamination may damage the separator and the electrodes, and trigger unwanted results when the mono-cells are built into a battery, such as short circuiting or deficient electrolyte adsorption.

### Summary of the invention

The invention is related to a method for producing a monocell for a battery in accordance with the appended claims. According to the method of the invention, cut-out patterns are produced in a first coated metal foil, a second coated metal foil and pair of separator sheets. The first foil is used for producing the first electrode and the second foil is used for producing the second electrode of the monocell. The first electrode can be the cathode and the second electrode the anode, or vice versa. The invention is hereafter summarized for the first case (first electrode is the cathode, second the anode), but the terms cathode and anode can be reversed.

From the cathode foil, the shape of the coated portion of the cathode is partially cut out along a cut-out lane. The cut-out is partial in the sense that said coated portion remains attached to the foil at the predefined position of the cathode tab. The cut-out pattern in the first foil additionally includes an alignment opening, while the cut-out patterns in the anode foil and in the separator sheets also include respective alignment openings. The cathode foil is inserted between the separator sheets wherein at least one pair of alignment openings in said separator sheets are mutually aligned to each other and to an alignment opening in the cathode foil. The separator sheets are then bonded along the cut-out lane, to form a first assembly comprising a pocket that contains the coated cathode portion. The anode foil is then placed on or under said first assembly, and an alignment opening in the anode foil is aligned to the aligned openings in the first assembly The anode foil is attached to the first assembly to obtain a second assembly. From the second assembly, the monocell is cut out according to a predefined shape.

By leaving the coated cathode portion initially attached to the foil and by providing the respective alignment openings, correct positioning of the cathode foil between the separator sheets is enabled. Attachment of the anode foil to the first assembly enables forming a monocell with sufficient stiffness for easy handling, without requiring lamination.

### Brief description of the figures

Figure 1 illustrates a monocell suitable for producing a battery by the stacking technique.
Figures 2a to 2d illustrate the four components of the monocell shown in Figure 1.
Figures 3 to 5 illustrate cutting patterns of a cathode foil, an anode foil and two separator sheets according to a first embodiment of the invention.
Figures 6 and 7 illustrate how the cut foils and sheets shown in Figures 3-5 are assembled to form a monocell, in accordance with the first embodiment.
Figure 8 shows how the monocell is cut out from the assembly obtained by the assembly steps shown in Figure 7.
Figure 9 illustrates a slight variant of the embodiment shown in Figures 3 to 8.
Figures 10a to 10c illustrate cutting patterns applicable in continuous foils and separator sheets, for applying the method of the invention in a continuous production line.
Figure 11 and 12 illustrate cutting patterns of a cathode foil and an anode foil according to a second embodiment of the invention.
Figures 13a and 13b illustrate the assembly of a monocell according to the second embodiment.
Figures 14a to 14c illustrate an alternative set of cutting patterns applicable in the method of the invention, wherein additional alignment openings are provided.

### Detailed description of embodiments of the invention

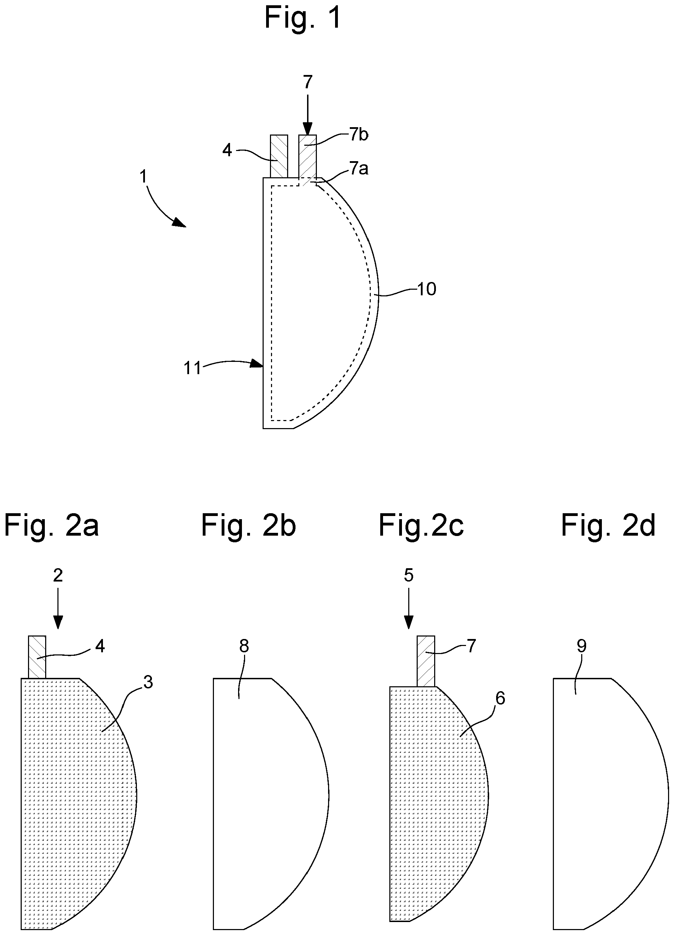

Figure 1 illustrates a monocell 1 suitable for producing a battery using the above-described stacking method. The battery comprises a number of superposed parts shown separately in Figures 2a to 2d. At the bottom of the monocell is one of the electrodes. In this exemplary case, it is the anode 2, shown in Figure 2a but it could also be the cathode. The anode is formed of a coated metal foil comprising a coated electrode portion 3 and a non-coated tab 4. The anode coating may be a graphite coating in the case of a rechargeable lithium-ion battery. The tab 4 is integral with the anode foil, i.e. the tab is a non-coated portion of the foil extending out from the coated portion 3. The anode is cut in the form of a 'D' which is merely one exemplary monocell shape. Other shapes are possible.

On top of the anode 2 is a pocket 11 comprising a first and second separator sheet with the cathode inserted between said sheets. The cathode 5 is shown in Figure 2c and is also formed of a metal foil having a coated portion 6 and a non-coated tab 7. The cathode coating may comprise lithium cobalt oxide or another lithium based active component in the case of a rechargeable lithium-ion battery. The separator sheets 8 and 9, shown separately in Figures 2b and 2d are attached to each other along the perimeter of the coated cathode portion 6, in an attachment lane 10 indicated with the help of dotted lines in Figure 1. The cathode tab 7 comprises a portion 7a that lies between the separator sheets 8 and 9 and a portion 7b that extends out of the pocket 11 and lies adjacent the anode tab 4 in the assembled monocell. The outer perimeter of the coated portion 3 of anode 2 corresponds to the outer perimeter of the cathode-containing pocket 11.

According to the invention, a monocell 1 as shown in Figure 1 is assembled from sheets of the respective materials which are pre-cut according to a specific pattern and subsequently aligned and assembled. The invention will be explained for the case of the D-shaped monocell, but it is applicable to any monocell shape.

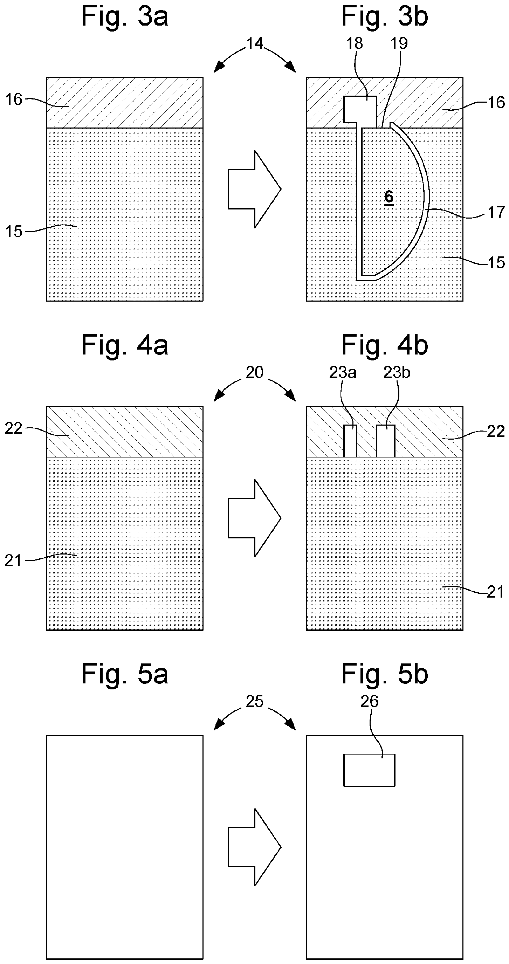

A first embodiment is illustrated in Figures 3 to 5. Figure 3a illustrates a rectangular cathode foil 14. It is a metal foil coated on its entire surface with the cathode coating except in a strip 16 along one side of the foil, i.e. said strip 16 is formed of the bare metal foil. The cathode foil 14 thus comprises a coated portion 15 and a non-coated portion 16. From this foil and as illustrated in Figure 3b, the coated portion 6 of the cathode is partially cut out by removing coated foil material in a cut-out lane 17 surrounding the shape of said coated portion 6. In addition, an alignment opening 18 is cut out from the non-coated strip 16 of foil material, so that a cut-out is obtained comprising the cut-out lane 17 and the alignment opening 18. The alignment opening fully covers the predefined surface area of the anode tab 4 at the predefined position thereof and extends to the left of said anode tab position. The coated cathode portion 6 remains attached to the foil at a pre-defined position 19, which is the designated position of the cathode tab.

Figure 4a shows a rectangular anode foil 20 equally comprising a coated portion 21 and a non-coated strip 22. From this foil, an alignment opening 23a is cut in the non-coated strip 22, as shown in Figure 3b.

The left-hand edges of both alignment openings 18 and 23a are placed at the same distance from the predefined anode tab position, which will enable the eventual alignment as explained further in this text.

In addition to the alignment opening 23a, a tab opening 23b is cut from the anode foil 20, on the other side of said intended anode tab position. The width of the tab opening 23b is equal to the combined width of the cathode tab 7 and of the spacing between the tabs 4 and 7 of the monocell. More generally, the tab opening 23b is dimensioned to cover at least the predefined surface area of the portion 7b of the cathode tab 7 extending out of the pocket 11, at the predefined position of said portion 7b.

Figure 5a shows a rectangular separator sheet 25. An alignment opening 26 is cut therein, as shown in Figure 5b, the height of the opening 26 equaling the height of the anode tab 4, the width of the opening 26 equaling the combined width of the adjacent tabs 4 and 7, including the spacing between said tabs, and the width of the alignment opening 23a in the anode foil. Two separator sheets 25 are cut in this way, i.e. having equal-sized alignment openings 26. The sheets 25 are formed of materials which can be attached to each other under the influence of heat and/or light. For example, a polyethylene sheet and polypropylene sheet can be bonded to each other in this way by heating. All cutting steps for creating the cut-out lane and openings can for example be done by laser cutting.

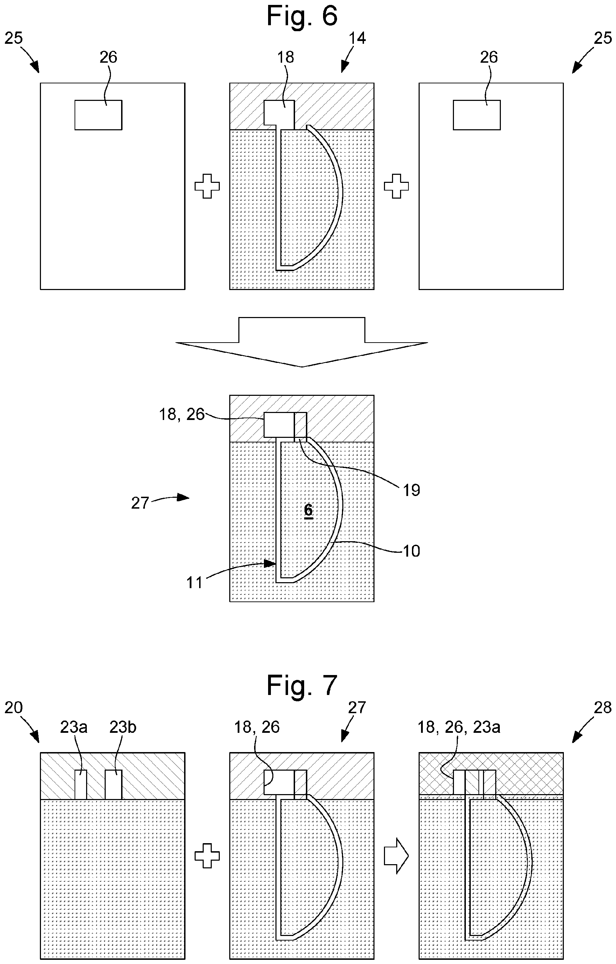

Following these cutting steps, the separator sheets 25 and the cathode foil 14 are superposed in the manner illustrated in Figure 6. In the superposed image, the separator sheets 25 are shown in transparent view. The cathode foil 14 is placed between the separator sheets 25, and the equal sized openings 26 of the separator sheets 25 are mutually aligned. The left edge of the alignment opening 18 is aligned to the left edge of said aligned openings 26. When the cathode foil 14 and the separator sheets 25 are aligned in this way, the separator sheets are in mutual contact along the cut-out lane 17. When pressed together and heated, for example by a physical heater or a laser, the separator sheets are bonded in the area corresponding to the cut-out lane 17, thereby forming an assembly 27. The cut-out lane 17 now becomes the attachment lane 10 shown in Figure 1. The assembly 27 comprises the pocket 11 containing the coated cathode portion 6. Said coated cathode portion 6 is immobilised by the bond between the separator sheets 25 in said attachment lane 10 and sandwiched between said separator sheets 25, while still remaining attached to the cathode foil 14 at the pre-defined position 19 of the cathode tab.

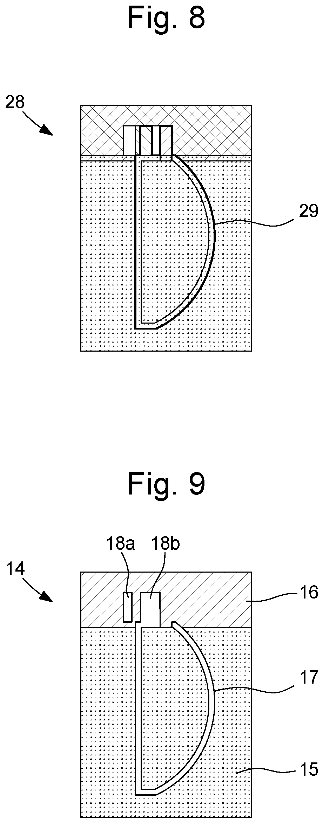

With reference to Figure 7, the cut-out anode foil 20 is then placed underneath the assembly 27 of the separator sheets and the cathode foil, with the left edge of the alignment opening 23a aligned to the left edge of the aligned openings 18 and 26 in the assembly 27. The superposed image in Figure 7 shows the cathode and anode foils as well as the separator sheets in transparent view, in order to visualize the alignment of the openings 18,23a and 26. The anode foil 20 is then attached to the pocket comprising the cut-out coated portion 6 of the cathode, by a suitable adhesive, thereby forming a further assembly 28. After this, the monocell 1 is cut out from the assembly 28 along the cutting line 29 shown in Figure 8, for example by laser cutting.

By cutting out the cathode partially, i.e. leaving it attached to the foil 14 at the tab position 19 prior to the bonding of the separator layers 25, and by providing alignment openings 18, 26 which enable a correct alignment of the cathode foil 14 and the separator sheets 25, correct positioning of the cathode between the separator sheets is ensured, regardless of the dimensions of the cathode. The alignment opening 23a in the anode foil furthermore enables the correct alignment of the electrodes mutually. The placement of the openings 18, 23a, 26 relative to the pre-defined position of the tabs furthermore allows the monocell to be cut out along a single cutting line 29 after the assembly of the various foils and sheets. All the parts of the monocell are attached together, which results in a monocell of high stiffness that can be handled easily, without requiring lamination of constituent layers.

A slight variation of the above-described embodiment is illustrated with reference to Figure 9. This figure shows an alternative cut-out pattern of the cathode foil 14. The cathode foil now comprises an alignment opening 18a and a tab opening 18b. The tab opening 18b is integral with the cut-out lane 17 and covers the predefined surface area of the anode tab 4 at the predefined position thereof. The cut-out patterns in the anode foil 20 and the separator sheets 25 are the same as in the previous embodiment. The only difference with the previous embodiment is that the alignment opening 18a of the cathode foil 14 is physically separate from the tab opening 18b, which illustrates the more general principle of this embodiment : both foils 14, 20 and both separator sheets 25 are provided with matching alignment openings which enable the foils and sheets to be overlayed and aligned by aligning the respective alignment openings along at least one edge of said openings (the left-hand edge in the embodiments shown).

The tab openings 18b, 23b are provided not for alignment purposes but for enabling to cut out the final assembly in a single cutting step that results in the required monocell shown in Figure 1. For this purpose, the tab opening 18b in the cathode foil 14 needs to cover at least the predefined surface area of the anode tab 4 at the predefined position thereof and the tab opening 23b in the anode foil 20 needs to cover at least the predefined surface area of the cathode tab portion 7b extending out of the pocket 11, at the predefined position of said cathode tab portion 7b.

The embodiment of Figures 3-7 is therefore a special case wherein the alignment opening 18a and the tab opening 18b in the cathode foil 14 form a single continuous opening 18, which can be referred to as the 'alignment opening' even though it fulfills a double function : alignment and enabling to cut out the monocell in a single cutting step.

It is also possible according to an embodiment, to provide the alignment openings 18a, 23a, 26 in the cathode and anode foils and in the separator sheets, but to not provide any tab openings. In that case, tab-shaped portions of the cathode foil and the anode foil need to be cut away after cutting out the assembly 28 along cutting line 29, in order to obtain the required monocell.

Likewise, the alignment openings 26 in the separator sheets 25 could have the same shape and size of the alignment openings 18a, 23a in the foils and not take into account the shape and positions of the tabs. In that case, separator sheet portions remaining between the tabs would need to be cut away after cutting out the assembly 28 along cutting line 29, in order to obtain the required monocell.

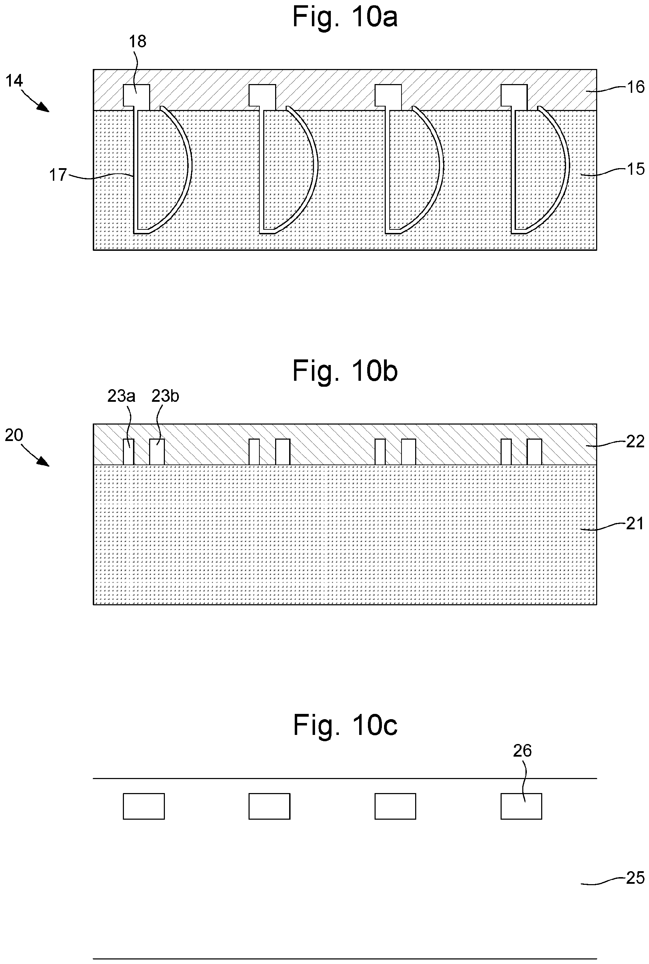

The method of the invention is suitable for producing monocells and batteries in a continuous process. Figures 10a to 10c illustrate repeated cut-out patterns in continuous rolls of a cathode foil 14 (Fig. 10a), an anode foil 20 (Fig. 10b) and two separator sheets 25 (Fig. 10c). The respective cut-out patterns described above are repeated at regular distances from each other, enabling the consecutive alignment and assembly of the various components in the manner described above.

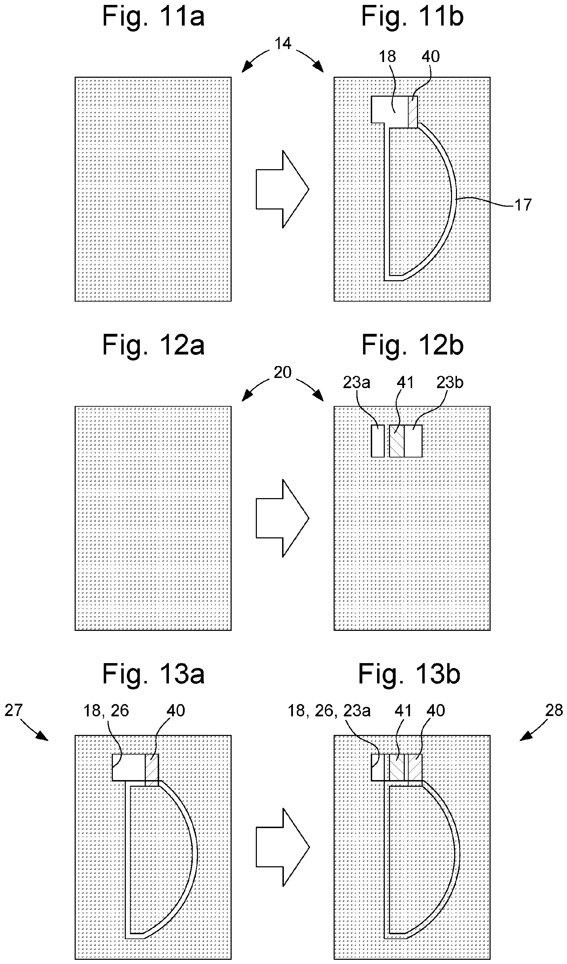

A further embodiment is illustrated in Figures 11 and 12, which show the cutting pattern in the cathode foil 14 and the anode foil 20. The cutting pattern in the separator sheets 25 is the same as in the previous embodiment, i.e. the cut-out openings 26. The rectangular cathode and anode foils 14 and 20 illustrated in Figures 11a and 12a are now fully coated, i.e. there is no uncoated metal strip along the side of the foils. Therefore, in the area corresponding with the tabs, the coating is to be removed locally. This is illustrated in Figures 11b and 12b, which show respectively the cathode tab area 40 and the anode tab area 41. The local removal of the coating can be done by laser ablation. The cut-out patterns of the cathode foil 14 and the anode foil 20 are the same as in the first embodiment, i.e. the cut-out line 17 and alignment opening 18 (combining alignment and tab opening) for the cathode foil 14 and the alignment opening 23a and tab opening 23b for the anode foil 20. The removal of the coating in the tab areas may be done before or after the cutting operations. Figure 13a illustrates how the cathode foil is inserted between and aligned to the two separator sheets to obtain the first assembly 27. Figure 13b illustrates how the first assembly is aligned to the anode foil to obtain the second assembly 28 prior to cutting out the monocell along the same cutting line 29 that is shown in Figure 8.

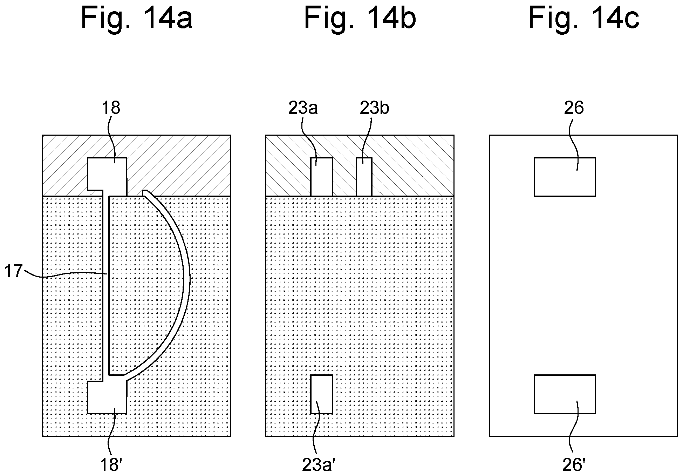

Figures 14a to 14b illustrate an embodiment wherein additional openings are provided on the opposite side of the electrodes. In the case shown, this is a mirrored copy 18' of the first alignment opening 18, and mirrored copies 23a', 26' of the alignment openings 23a and 26. These additional openings are purely included for alignment purposes and will not form part of the final cut-out monocell. The presence of these openings will improve the alignment prior to bonding the separator sheets and prior to adhering the anode foil to the first assembly.

The invention is applicable to rechargeable as well as non-rechargeable planar batteries of any realistically realizable shape and dimensions. A planar battery according to the invention is obtainable by stacking monocells produced by the method according to any embodiment of the invention into a container, connecting the tabs of the first and second electrodes of the monocells to respective battery contacts, and by closing and sealing the container.

## Claims

1. A method for producing a monocell (1) for a planar battery, the monocell comprising a first and second electrode (5, 2), each electrode comprising a coated metal foil portion (6,3) and a non-coated metal tab (7, 4), said coated foil portions and said tabs having a predefined position relative to each other, as well as a predefined shape and surface area, wherein the first electrode (5) is sandwiched between two separator sheets (8, 9) attached to each other along an attachment lane (10) running along the perimeter of the coated foil portion (6) of the first electrode except at the position (19) of the tab (7) of the first electrode, so that the separator sheets (8, 9) form a pocket (11) with the coated foil portion (6) of the first electrode inserted therein and a portion (7b) of the tab (7) of the first electrode extending out of said pocket (11), and wherein the second electrode (2) is attached to said pocket (11),
the method comprising the steps of :
- providing a first and a second metal foil (14, 20), each foil comprising thereon a coating comprising chemical components of the respective first and second electrode,
- in the first foil (14), partially cutting out the coated foil portion (6) of the first electrode according to a predefined shape, by removing foil material in a cut-out lane (17) running along the perimeter of said shape, wherein said coated foil portion (6) of the first electrode remains attached to the first foil (14) at the predefined position (19) of the tab (7) of the first electrode (5),
- cutting out a first alignment opening (18, 18a) in the first foil (14),
- cutting out a second alignment opening (23a) in the second foil (20),
- providing a first and second separator sheet (25) and cutting at least one pair of alignment openings (26) respectively in the first and second separator sheet,
- inserting the cut first foil (14) between the first and second separator sheet (25) so that the separator sheets (25) face each other along said cut-out lane (17), and aligning said pair of alignment openings (26) in the separator sheets to each other and to the first alignment opening (18, 18a) in the first foil (14),
- thereafter, attaching the separator sheets (25) to each other along said cut-out lane (17), thereby obtaining a first assembly (27) comprising said pocket (11) with the partially cut-out coated foil portion (6) of the first electrode (5) contained therein,
- aligning the second foil (20) to the first assembly (27) so that the second alignment opening (23a) in the second foil (20) is aligned to said pair of alignment openings (26) in the separator sheets (25) and to the first alignment opening (18, 18a) in the first foil (14),
- thereafter, attaching the second foil (20) to the first assembly (27), thereby obtaining a second assembly (28),
- cutting the second assembly (28) along a cut-out line (29) that follows the outer shape of the attachment lane (10) and of the tabs (7,4).

2. A method according to claim 1, comprising :
- before inserting the first foil (14) between the separator sheets (25), cutting out a first tab opening (18b) in the first foil, wherein said first tab opening covers at least the predefined surface area of the tab (4) of the second electrode (2) at the predefined position thereof,
- before aligning the second foil (20) to the first assembly (27), cutting out a second tab opening (23b) in the second foil, wherein said second tab opening covers at least the predefined surface area of said portion (7b) of the first tab (7) extending out of the pocket (11), at the predefined position of said portion (7b) of the first tab.

3. A method according to claim 2, wherein the alignment opening and the tab opening (18b) in the first foil form a single continuous opening (18).

4. A method according to any one of the preceding claims, wherein one of said pairs of alignment openings (26) in the separator sheets (25) covers the predefined surface area of the tab (4) of the second electrode (2) and of the portion (7b) of the tab of the first electrode (5) extending out of the pocket (11).

5. A method according to any one of the preceding claims, wherein said first and second foil (14, 20) are rectangular foils having a coated portion (15, 21) and a non-coated strip (16,22) along one side of the foils, and wherein the cut-out lane (17) and the first and second alignment openings (18, 18a, 23a) are formed so that the tabs (7, 4) of the monocell are formed of material of the non-coated strips (16, 22), and the coated electrode portions (6,3) of the monocell are formed of the coated portions (15, 21) of the foils.

6. A method according to any one of the claims 1 to 4, wherein said first and second foil (14, 20) are fully coated foils, and wherein the method comprises additional steps of removing the coatings on said respective foils in areas (40,41) corresponding at least with the predefined surface areas of the tabs (7, 4), at the pre-defined positions thereof.

7. A method according to any one of the preceding claims, wherein the alignment openings (18, 18a, 23a, 26) in the first and second foil (14, 20) and in the separator sheets (25) are rectangular in shape.

8. A method for producing a battery, by producing a plurality of monocells (1) according to the method of any one of the preceding claims, and by stacking said monocells into a container, connecting the tabs (7, 4) of the first and second electrodes (5, 2) of the monocells to respective battery contacts, and by closing and sealing the container.
